# EUROPEAN PATENT APPLICATION

(11) **EP 2 725 254 A1**
(43) Date of publication of application: **30.04.2014**
(21) Application number: 13190542.4
(22) Date of filing: 28.10.2013
(51) Int. Cl.: F16D 55/226, F16D 65/62

(54) **Vehicle hydraulic brake device**

(30) Priority: 29.10.2012 TW 101139930
(71) Applicant: Lio Ho Machine Works Ltd., 32056 Taoyuan County (TW)
(72) Inventor: Yen, Jang-Yuan, 32056 Taoyuan County (TW); Lee, Shao-Ning, 32056 Taoyuan County (TW); Chen, Kun-I, 32056 Taoyuan County (TW)
(74) Representative: Granleese, Rhian Jane

(57) **Abstract**

A vehicle hydraulic brake device comprises a housing (2), a hollow piston (3) connected to a lining (31), a spindle (33) extending into the piston (3) and having a worm (333), the spindle (33) being simultaneously rotatable about a spindle axis and movable along the spindle axis between a braking position and a non-braking position, a worm-engaging shaft (32) having a worm gear that meshes with the worm (333), a gear axis being transverse to the spindle axis, the worm-engaging shaft (32) being rotatable about the gear axis so as to drive simultaneous rotation of the spindle (33) about the spindle axis and axial movement of the spindle (33) along the spindle axis, and a driving unit (4) coupled to the worm-engaging shaft (32).

## Description

This invention relates to a vehicle hydraulic brake device, more particularly to a vehicle hydraulic brake device that is capable of eliminating deadlock and that has the function of wear compensation.

U.S. Patent No. 6,536,561 discloses a conventional electromagnetic wheel brake device that includes a motor, a planetary gear set driven by the motor, a caliper housing, a spindle mounted rotatably in the caliper housing and coupled to the planetary gear set, a nut coupled to the spindle through threaded rollers, and a brake lining connected to the nut for pressing against a brake disc. The motor drives rotation of the spindle through the planetary gear set, which results in axial displacement of the nut and the brake lining between a non-braking position and a braking position. The aforesaid electromagnetic wheel brake device does not have a wear compensation mechanism for compensating wear of the brake lining in order to maintain a constant brake clearance between the brake lining and the brake disc. In addition, when the electromechanical wheel brake encounters a deadlock condition, i.e., the brake lining is stuck at the braking position and is unable to be returned to the non-braking position, the motor and the planetary gear set are required to be decoupled from the spindle in order to permit elimination of the deadlock condition, the operation of which is laborious.

U.S. Patent Application Publication No. 2002/0041123 discloses a conventional vehicle hydraulic disk brake that has a wear compensation mechanism for maintaining a constant brake clearance between the brake lining and the brake disc. The conventional vehicle hydraulic disk brake includes a caliper housing, a spring cage mounted in the caliper housing, a hollow piston mounted in the caliper housing, a bolt-shaped strut part (or a spindle) disposed in the piston and held by the spring cage, a sleeve-shaped strut part disposed in the piston and engaging and cooperating with the bolt-shaped strut part to define a non-selflocking steep-lead-angle thread paring, a spring washer arrangement mounted in the piston for preventing rotation of the sleeve-shaped strut part relative to the piston, and a brake lining connected to the piston for pressing against a brake disc. The spring cage is configured to lock the bolt-shaped strut part against rotation without impeding an axial displacement of the bolt-shaped strut part. Upon a hydraulic brake actuation for moving the brake lining together with the piston from a non-braking position to a braking position, the piston is displaced a distance (not greater than a thread clearance which exists in the steep-lead-angle thread paring between the bolt-shaped strut part and the sleeve-shaped strut part) in an axial direction to permit pressing of the brake lining against the brake disc, and the sleeve-shaped strut part participates fully in the displacement of the piston. However, as a result of wear of the brake lining after repeated applications of the hydraulic disk brake, the piston has to travel a distance exceeding the thread clearance in order to apply the brake lining against the brake disc. As a consequence, the bolt-shaped strut part, which is held by the spring cage, prevents the sleeve-shaped strut part from participating in the entire displacement of the piston during brake actuation. Consequently, the sleeve-shaped strut part is released from constraint of the washer arrangement and an axial force which is transmitted by the steep-lead-angle thread paring generates a torque, by which the sleeve-shaped strut part is rotated relative to the bolt-shaped strut part. Because the effective length of an adjusting strut formed by the bolt-shaped strut part and the sleeve-shaped strut part is increased, the piston, after the brake actuation, is no longer able to return to its original starting position, with the result that the brake clearance is reduced back to its starting setpoint.

The aforesaid conventional vehicle hydraulic disk brake is disadvantageous in that the same requires a complicated and expensive wear compensation mechanism for wear compensation of the brake lining and that the assembly thereof is also complicated.

Therefore, an object of the present invention is to provide a vehicle hydraulic brake device that can overcome at least one of the aforesaid drawbacks associated with the prior art.

According to this invention, there is provided a vehicle hydraulic brake device that comprises: a housing having a first end and defining a disc-receiving space, a rod-extension channel, a piston-receiving space that extends between and that is in spatial communication with the disc-receiving space and the rod-extension channel, and a gear-receiving channel that is disposed between the first end and the piston-receiving space and that extends in a direction transverse to the rod-receiving channel, the gear-receiving channel having an open end; a brake lining disposed in the disc-receiving space; a hollow piston disposed in the piston-receiving space, connected to the brake lining, and defining a piston chamber therein; a spindle defining a spindle axis, extending through the rod-extension channel and into the piston chamber, and having a pushing end portion, an operating end portion that is opposite to the pushing end portion along the spindle axis and that extends outwardly through the first end of the housing, and a worm extending between the pushing end portion and the operating end portion, the pushing end portion being disposed in the piston chamber, the spindle being simultaneously rotatable about the spindle axis and movable along the spindle axis relative to the housing between a braking position and a non-braking position, the pushing end portion pressing against the piston during movement of the spindle from the non-braking position to the braking position; a worm-engaging shaft defining a gear axis, extending into the gear-receiving channel and having a first end portion, a second end portion that is opposite to the first end portion and that extends through the open end of the gear-receiving channel, and a worm gear that extends between the first and second end portions and that meshes with the worm, the gear axis being transverse to the spindle axis, the worm-engaging shaft being rotatable about the gear axis so as to drive simultaneous rotation of the spindle about the spindle axis and axial movement of the spindle along the spindle axis relative to the housing; and a driving unit coupled to the worm-engaging shaft so as to drive rotation of the worm-engaging shaft about the gear axis.

In drawings which illustrate an embodiment of the invention,
Fig. 1 is a perspective view of the preferred embodiment of a vehicle hydraulic brake device according to the present invention;
Fig. 2 is a sectional view of the preferred embodiment taken along line II - II in Fig. 1, illustrating a state where a spindle is disposed at a non-braking position;
Fig. 3 is a sectional view of the preferred embodiment taken along line III - III in Fig. 1;
Fig. 4 is a perspective view illustrating how a spindle engages a worm-engaging shaft of the preferred embodiment;
Fig. 5 is a sectional view of the preferred embodiment illustrating a state where the spindle is disposed at a braking position;
Fig. 6 is a schematic view of the preferred embodiment illustrating a state where the spindle is shifted from a previous non-braking position to a new non-braking position; and
Fig. 7 is a sectional view of the preferred embodiment illustrating how the piston is hydraulically moved from a non-stopping position to a stopping position.

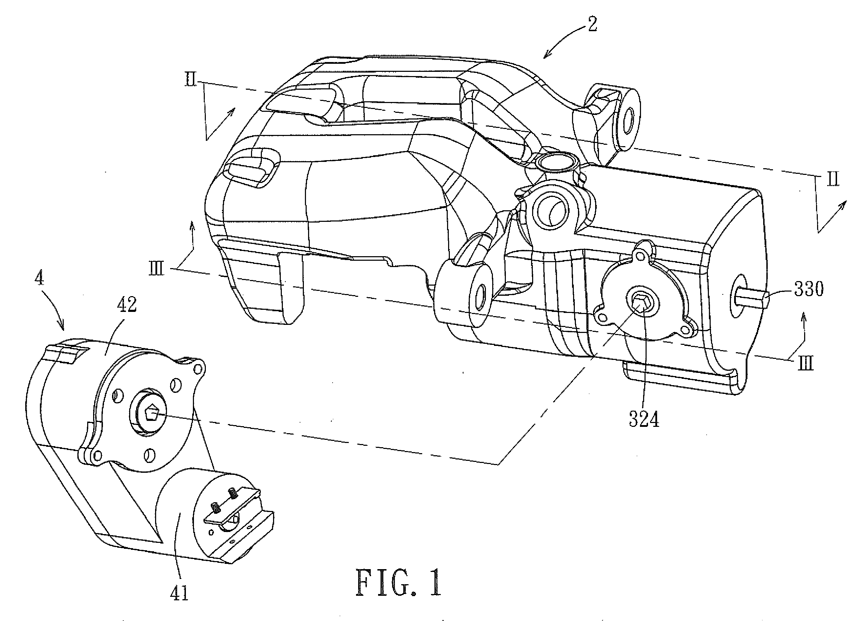

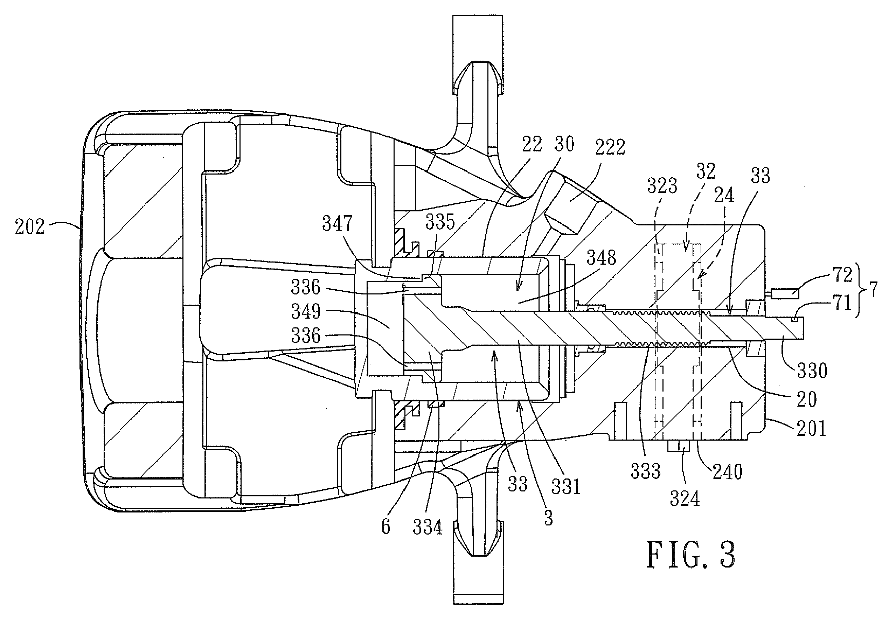

Figs. 1 to 5 illustrate the preferred embodiment of a vehicle hydraulic brake device with a function of wear compensation according to the present invention. In particular, the vehicle hydraulic brake device of the present invention can provide either hydraulic brake actuation function or electromechanical parking brake actuation function, and can be suitably used in an integrated Electronic Parking Brake (iEPB) system which has been developed in recent years by the vehicle industries.

The vehicle hydraulic brake device includes a housing 2, a brake lining 31, a hollow piston 3, a spindle 33, a driving unit 4, a worm-engaging unit 32, an urging member 6 and a detecting unit 7.

The housing 2 has first and second ends 201, 202 and defines a disc-receiving space 21, a rod-extension channel 20, a piston-receiving space 22 that extends between and that is in spatial communication with the disc-receiving space 21 and the rod-extension channel 20, and a gear-receiving channel 24 that is disposed between the first end 201 and the piston-receiving space 21 and that extends in a direction transverse to the rod-receiving channel 20. The gear-receiving channel 24 has an open end 240. A brake disc 1 is securely received in the disc-receiving space 21. The brake lining 31 is disposed in the disc-receiving space 21, and is movable toward and away from the brake disc 1.

The hollow piston 3 is disposed in the piston-receiving space 22, has a closed end that is connected to the brake lining 31, and defines a piston chamber 30 therein.

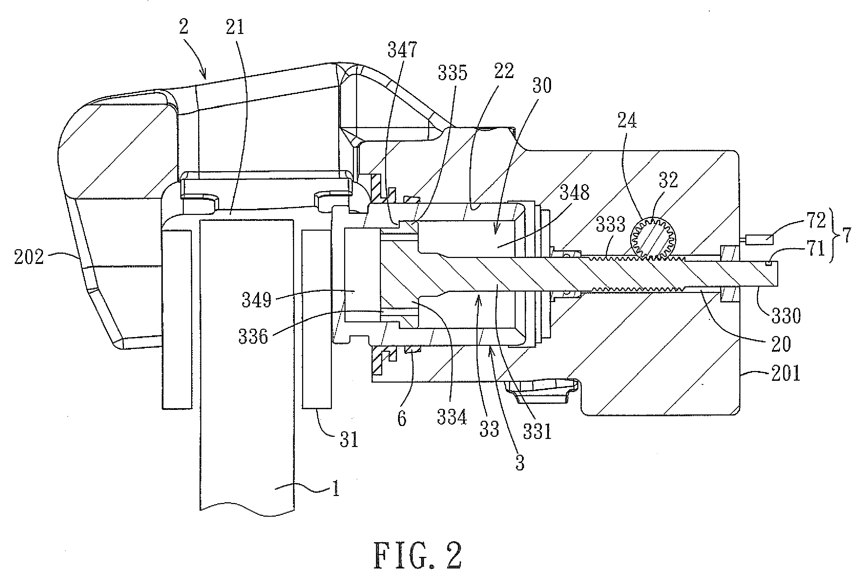

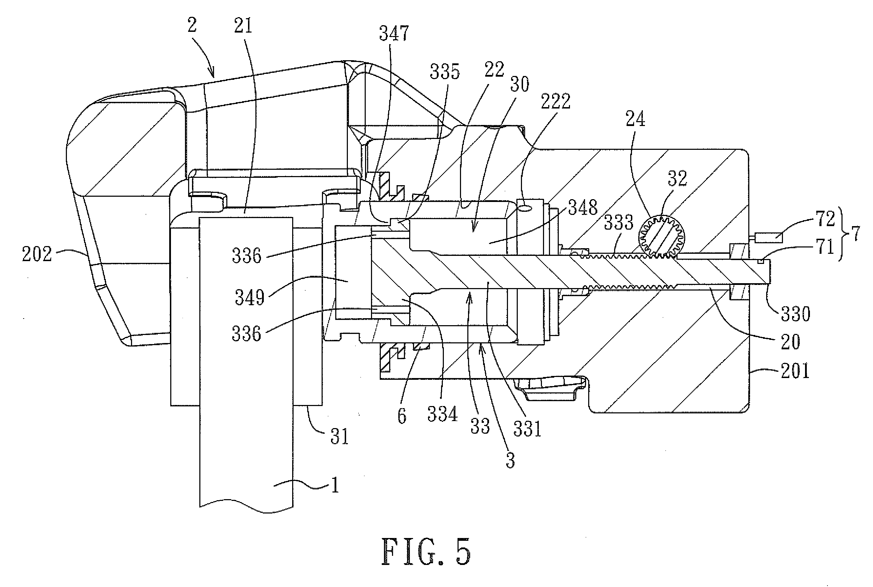

The spindle 33 defines a spindle axis (X), extends through the rod-extension channel 20 and into the piston chamber 30, and has a pushing end portion 334, an operating end portion 330 that is opposite to the pushing end portion 334 along the spindle axis (X) and that extends outwardly through the first end 201 of the housing 2, and a worm 333 extending between the pushing end portion 334 and the operating end portion 330. The pushing end portion 334 is disposed in the piston chamber 30. The spindle 33 is simultaneously rotatable about the spindle axis (X) and movable along the spindle axis (X) relative to the housing 2 between a braking position (see Fig. 5) and a non-braking position (see Fig. 2). The pushing end portion 334 presses against the piston 3 during movement of the spindle 33 from the non-braking position to the braking position.

The urging member 6 is mounted to the housing 2 for urging the piston 3 to move in the direction of movement of the spindle 33 from the braking position back to the non-braking position.

The worm-engaging shaft 32 defines a gear axis (Y), extends into the gear-receiving channel 24, and has a first end portion 323, a second end portion 324 that is opposite to the first end portion 323 and that extends through the open end 240 of the gear-receiving channel 24, and a worm gear 322 that extends between the first and second end portions 323, 324 and that meshes with the worm 333. The gear axis (Y) is transverse to the spindle axis (X). The worm-engaging shaft 32 is rotatable about the gear axis (Y) relative to the housing 2 so as to drive simultaneous rotation of the spindle 33 about the spindle axis (X) and axial movement of the spindle 33 along the spindle axis (X) relative to the housing 2.

The driving unit 4 is coupled to the worm-engaging shaft 32 so as to drive rotation of the worm-engaging shaft 32 about the gear axis (Y).

The spindle 33 further has a shank portion 331 that extends between the operating end portion 330 and the pushing end portion 334. The pushing end portion 334 is enlarged in diameter from the shankportion 331, and defines a shoulder 335. The piston 3 has an inner surface that defines the piston chamber 30 and an inner neck 347. The shoulder 335 presses against the inner neck 347 during movement of the spindle 33 from the non-braking position to the braking position.

The pushing end portion 334 of the spindle 33 divides the piston chamber 30 into first and second chamber halves 348, 349, and is formed with a plurality of fluid passages 336, such that the first chamber half 348 is in fluid communication with the second chamber half 349 through the fluid passages 336.

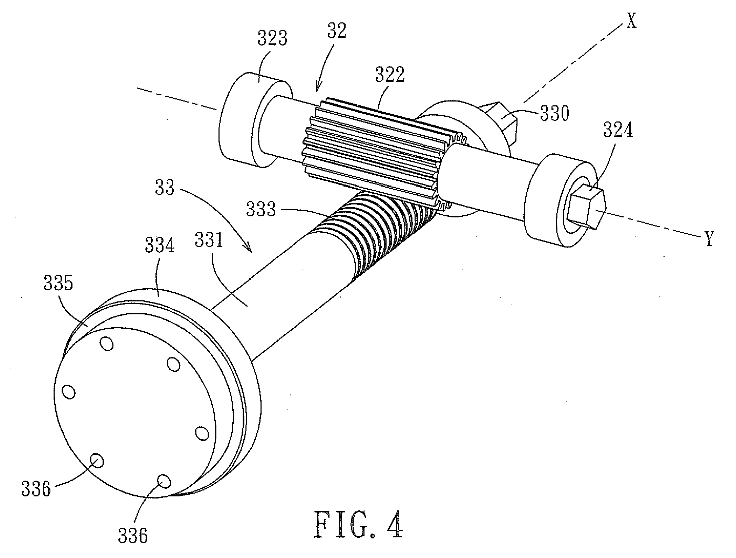

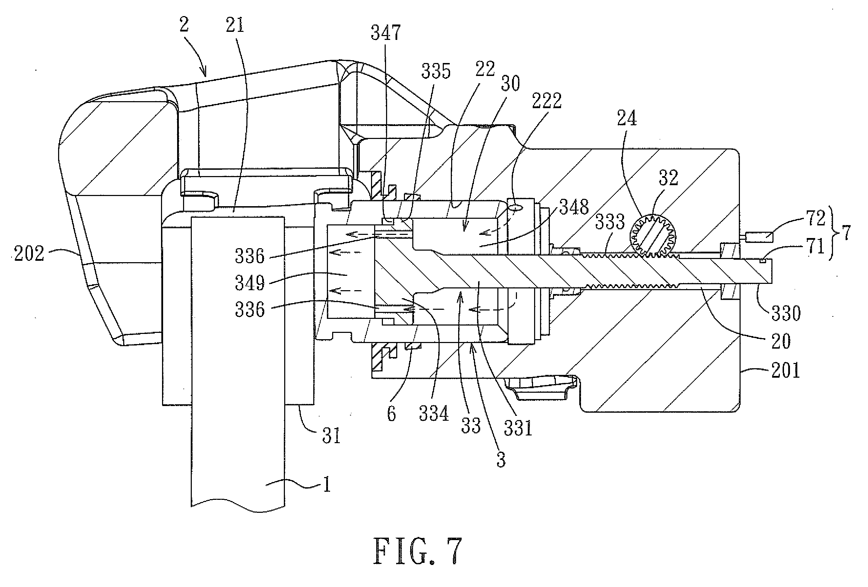

Referring to Fig. 7, the piston 3 is adapted to be hydraulically driven by a hydraulic fluid, which is delivered from a hydraulic fluid source (not shown) into the piston chamber 30 through a fluid inlet 222, to move relative to the spindle 33 and the housing 2 along the spindle axis (X) (see Fig. 4) from a non-stopping position (see Fig. 2) to a stopping position (see Fig. 7) during a hydraulicbrake actuation. The inner neck 347 is in contact with the shoulder 335 when the piston 3 is disposed at the non-stopping position, and is spaced apart from the shoulder 335 when the piston 3 is disposed at the stopping position.

In this embodiment, the driving unit 4 includes a motor 41 and a planetary gear set 42 that couples the motor 41 to the second end portion 324 of the worm-engaging shaft 32.

The detecting unit 7 is disposed adjacent to the housing 2, and is configured to be able to directly or indirectly measure the number of revolutions of the spindle 33 which can be used in the process of wear compensation of the brake lining 31. The detecting unit 7 includes a Hall effect sensor 72 and a magnetic element 71 that is secured to one of the driving unit 4 and the spindle 33. In this embodiment, the magnetic element 71 is secured to the operating end portion 330 of the spindle 33. The Hall effect sensor 72 is secured to the housing 2, is adapted to be connected to an Electronic Controlling Unit (ECU) (not shown), is disposed adjacent to the magnetic element 71, and cooperates with the magnetic element 71 to generate Hall effect when the magnetic element 71is brought into alignment with the Hall effect sensor 72 during rotation of the spindle 33 about the spindle axis (X) so as to permit direct detection of the number of revolutions of the spindle 33. It is noted that any rotatable part, such as an output shaft (not shown) of the motor 41 or the planetary gear set 42, which are co-rotatable with the spindle 33, can be used as an detected object detected by the detecting unit 7, and that the number of revolutions of the rotatable part detected by the detecting unit 7 can be used to calculate the number of revolutions of the spindle 33, thereby permitting indirect measuring of the number of the revolutions of the spindle 33.

The motor 41 of the driving unit 4 is controlled by the ECU, such that upon electromechanical parking brake actuation, the motor 41 is actuated by the ECU to drive simultaneous rotation of the spindle 33 and forward movement of the spindle 33, which results in forward movement of the brake lining 31 toward the brake disc 1, and is disabled when an electric current of the motor 41 is increased to a value exceeding a predetermined current setpoint (which is stored in the ECU) by a friction force generated by the pressing of the brake lining 31 against the brake disc 1. It is noted that the worm 333 of the spindle 33 and the worm gear 322 are designed in such a manner that the engagement between the worm 333 and the worm gear 322 is sufficient to provide a self-locking effect (a large static friction) that prevents rotation of the spindle 33, thereby maintaining the parking state of the vehicle hydraulic brake device, after the motor 41 is disabled.

When wearing of the brake lining 31 occurs after repeated applications of the vehicle hydraulic brake device, the clearance (n) between the brake lining 31 and the brake disc 1 is increased, i.e., the forward travelling distance of the spindle 33 from the non-braking position to the braking position needs to also increase correspondingly. Hence, a wear compensation mechanism is needed to compensate for the wear of the brake lining 31 so as to maintain a constant clearance (n) between the brake lining 31 and the brake disc 1.

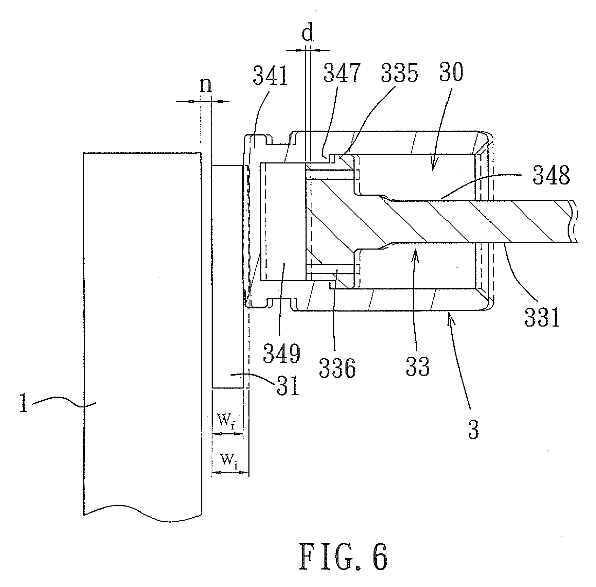

Referring to Fig. 6, in combination with Fig. 2, the wear compensation is realized by controlling a backward travelling distance of the spindle 33. The operation of the wear compensation mechanism is described as follows. When the electromechanical parking brake actuation is cancelled, the motor 41 is actuated by the ECU to drive simultaneous rotation of the spindle 33 (i.e., the motor 41 generates a torque overcoming the static friction) and backward movement of the spindle 33 via the worm-engaging shaft 32. As the threaded spindle 33 moves backward, the urging member 6 urges backward movement of the piston 3, along with the brake lining 31, away from the brake disc 1. The Hall effect sensor 72 together with the ECU detects and counts the number of revolutions of the spindle 33 during rotation of the spindle 33. The motor 41 is then disabled by the ECU to stop backward movement of the spindle 33 when the accumulated number of revolutions of the spindle 33 is equal to a fixed predetermined number of revolutions that is stored in the ECU. Since the predetermined number of revolutions is fixed, the backward travelling distance of the spindle 33 is also fixed each time the spindle 33 is moved from the braking position to a new non-braking position, which is shifted a distance (d) from the previous non-braking position (see Fig. 6), i.e., the distance (d) is equal to a wear thickness (δ) of the brake lining 31, in which δ = Wᵢ - W_{f}, where Wᵢ (represented by the dash line in Fig. 6) is the previous thickness of the brake lining 31 before wearing and W_{f} (represented by the solid line in Fig. 6) is the new thickness of the brake lining 31afterwearing. Hence, the wear compensation can be easily realized in the vehicle hydraulic brake device by the incorporation of the detecting unit 7.

Moreover, by designing the spindle 33 to be simultaneously rotatable about the spindle axis (X) and movable along the spindle axis (X), the aforesaid sleeve-shaped strut part of the conventional vehicle hydraulic disk brake can be dispensed with.

In addition, the operating end portion 330 of the spindle 33 has a non-circular cross-section, and protrudes outwardly to an exterior of the housing 2, so that when the brake lining 31 presses against the brake disc 1 and when the brake lining 31 together with the brake disc 1 is undesirably and accidentally brought into a deadlocked condition during parking operation, a user can use a wrench to grip and rotate the operating end portion 330 of the spindle 33 in order to return the spindle 33 to the non-braking position and solve the deadlocked condition. Hence, the aforesaid laborious drawback of eliminating the deadlock condition as encountered in the prior art can be overcome.

While the present invention has been described in connection with what is considered the most practical and preferred embodiment, it is understood that this invention is not limited to the disclosed embodiment but is intended to cover various arrangements included within the spirit and scope of the broadest interpretation and equivalent arrangements.

## Claims

1. A vehicle hydraulic brake device **characterized by**:
a housing (2) having a first end (201) and defining a disc-receiving space (21), a rod-extension channel (20), a piston-receiving space (22) that extends between and that is in spatial communication with said disc-receiving space (21) and said rod-extension channel (20), and a gear-receiving channel (24) that is disposed between said first end (201) and said piston-receiving space (22) and that extends in a direction transverse to said rod-receiving channel (20), said gear-receiving channel (24) having an open end (240);
a brake lining (31 disposed in said disc-receiving space (21);
a hollow piston (3) disposed in said piston-receiving space (22), connected to said brake lining (31), and defining a piston chamber (30) therein;
a spindle (33) defining a spindle axis (X), extending through said rod-extension channel (20) and into said piston chamber (30), and having a pushing end portion (334), an operating end portion (330) that is opposite to said pushing end portion (334) along the spindle axis (X) and that extends outwardly through said first end (201) of said housing (2), and a worm (333) extending between said pushing end portion (334) and said operating end portion (330), said pushing end portion (334) being disposed in said piston chamber (30), said spindle (33) being simultaneously rotatable about the spindle axis (X) and movable along the spindle axis (X) relative to said housing (2) between a braking position and a non-braking position, said pushing end portion (334) pressing against said piston (3) during movement of said spindle (33) from the non-braking position to the braking position;
a worm-engaging shaft (32) defining a gear axis (Y), extending into said gear-receiving channel (24) and having a first end portion (323), a second endportion (324) that is opposite to said first end portion (323) and that extends through said open end (240) of said gear-receiving channel (24), and a worm gear (322) that extends between said first and second end portions and that meshes with said worm (333), the gear axis (Y) being transverse to the spindle axis (X), said worm-engaging shaft (32) being rotatable about the gear axis (Y) so as to drive simultaneous rotation of said spindle (33) about the spindle axis (X) and axial movement of said spindle (33) along the spindle axis (X) relative to said housing (2); and
a driving unit (4) coupled to said worm-engaging shaft (32) so as to drive rotation of said worm-engaging shaft (32) about the gear axis (Y).

2. The vehicle hydraulic brake device of claim 1, further **characterized by** a detecting unit (7) that is disposed adjacent to said housing (2) and that is configured to be able to directly or indirectly measure the number of revolutions of said spindle (33).

3. The vehicle hydraulic brake device of claim 2, **characterized in that** said detecting unit (7) includes a magnetic element (71) and a sensor (72), said magnetic element (71) being secured to one of said spindle (33) and said driving unit (4), said sensor (72) being disposed adj acent to and cooperating with said magnetic element (71) to detect the number of revolutions of said spindle (33).

4. The vehicle hydraulic brake device of claim 1, **characterized in that** said spindle (33) further has a shank portion (331) that extends between said operating end portion (330) and said pushing end portion (334), said pushing end portion (334) being enlarged in diameter from said shank portion (331) and defining a shoulder (335), said piston (3) having an inner surface that defines an inner neck (347), said shoulder (335) pressing against said inner neck (347) during movement of said spindle (33) from the non-braking position to the braking position.

5. The vehicle hydraulic brake device of claim 4, **characterized in that** said pushing end portion (334) of said spindle (33) divides said piston chamber (30) into first and second chamber halves (348, 349), and is formed with a fluid passage (336), such that said first chamber half (348) is in fluid communication with said second chamber half (349) through said fluid passage (336), said piston (3) being adapted to be hydraulically driven by a hydraulic fluid that fills in said piston chamber (30) to move relative to said spindle (33) and said housing (2) along the spindle axis (X) from a non-stopping position to a stopping position, said inner neck (347) being in contact with said shoulder (355) when said piston (3)is disposed at the non-stopping position, and being spaced apart from said shoulder (355) when said piston (3) is disposed at the stopping position.
